# EUROPÄISCHE PATENTANMELDUNG

(11) **EP 0 837 157 A2**
(43) Veröffentlichungstag der Anmeldung: **22.04.1998**
(21) Anmeldenummer: 97117675.5
(22) Anmeldetag: 13.10.1997
(51) Int. Cl.: C25B 9/00, C25B 11/03

(54) **Elektrodenanordnung**

(30) Priorität: 17.10.1996 AT 606/96
(71) Anmelder: MAITRON CHEMIEFREIE WASSERBEHANDLUNG G.M.B.H., 6020 Innsbruck (AT)
(72) Erfinder: Leiter, Klaus, 6176 Völs (AT); Walder, Gerhard, 6020 Innsbruck (AT)
(74) Vertreter: Torggler, Paul Norbert

(57) **Zusammenfassung**

Bei einer Elektrodenanordnung mit einer elektrisch leitenden Elektrode (1) und einer elektrisch leitenden Gegenelektrode (2), zwischen denen eine elektrische Spannung unter Ausbildung eines elektrischen Feldes anlegbar ist und die in einem Dielektrikum (3) eingebettet sind, wobei die Elektrode Löcher im Leitermaterial zur Ausbildung eines Felddurchgriffs auf die Oberfläche des Dielektrikums aufweist, variiert das von der Elektrode (1) und Gegenelektrode (2) hervorgerufene, auf die Oberfläche (7) des Dielektrikums (3) durchgreifende Feld an der Oberfläche (7) des Dielektrikums (3) örtlich.

## Beschreibung

Die Erfindung betrifft eine Elektrodenanordnung mit einer elektrisch leitenden Elektrode und einer elektrisch leitenden Gegenelektrode, zwischen denen eine elektrische Spannung unter Ausbildung eines elektrischen Feldes anlegbar ist und die in einem Dielektrikum eingebettet sind, wobei die Elektrode Löcher im Leitermaterial zur Ausbildung eines Felddurchgriffs auf die Oberfläche des Dielektrikums aufweist.

Eine derartige Elektrodenanordnung ist aus der WO 95/26931 bekannt und wird zur gezielten Bildung von Keimen oder Kristallen in einer Lösung bzw. Schmelze verwendet. Die Funktionsweise einer solchen Elektrode ist in dieser Schrift bereits ausführlich beschrieben worden und wird in der vorliegenden Schritt nur kurz wiederholt. Wesentlich für die Elektrodenanordnung der WO 95/26913 ist die Kombination einer geeigneten (polymeren) Oberfläche eines dielektrischen Materials, das im Kontakt zur Lösung/Schmelze steht, und einem elektrischen Feld, das im Dielektrikum über den Felddurchgriff durch die Gegenelektrode erzeugt wird und an der Oberfläche wirksam wird. Das elektrische Feld hat die Aufgabe, durch Polarisation des Dielektrikums die funktionellen Gruppen an der Oberfläche zu orientieren und solcherart die Ausprägung der sich bildenden dielektrischen Doppelschicht an der Grenzfläche Lösung/Dielektrikum zu beeinflussen.

Aufgabe der vorliegenden Erfindung ist es, diese bekannte Elektrode hinsichtlich ihrer Wirkung weiter zu verbessern.

Erfindungsgemäß gelingt dies bei einer Elektrode der eingangs genannten Art dadurch, daß das von der Elektrode und Gegenelektrode hervorgerufene, auf die Oberfläche des Dielektrikums durchgreifende Feld an der Oberfläche des Dielektrikums örtlich oder zeitlich variiert.

Für viele Anwendungen läßt sich die für den gewünschten Kristallisationsprozeß am besten geeignete dielektrische Doppelschicht nicht von vornherein festlegen. In diesen Fällen ist es günstig, an einem mit der Lösung/Schmelze in Kontakt stehenden Dielektrikum durch Variation des Betrages, der Richtung und der Polarität der elektrischen Feldstärke unterschiedliche Polarisationszonen an der Grenzfläche zu erzeugen; in der Folge bilden sich an der Grenzfläche sich in ihrem Aufbau unterscheidende dielektrische Doppelschichten aus, darunter auch Schichten, die geeignet sind für den gewünschten Kristallisationsprozeß.

Erfolgt diese Feldstärkenmodulation kontinuierlich oder stochastisch entlang der Oberfläche der Elektrodenanordnung, dann bilden sich mit hoher Wahrscheinlichkeit für die Ausbildung geeigneter dielektrischer Doppelschichten günstige Polarisationszustände an der Oberfläche aus.

Eine bevorzugtes Ausführungsbeispiel der Erfindung sieht dazu vor, daß die zwischen den Löchern im Leitenmaterial der Elektrode vorliegende Stege des Leitermaterials unterschiedliche Abmessungen aufweisen. Gemäß einem anderen bevorzugten Ausführungsbeispiel der Erfindung ist vorgesehen, daß die Löcher im Leitermaterial der Elektrode unterschiedliche Abmessungen aufweisen und/oder unregelmäßig verteilt sind.

Eine Variation der elektrischen Feldstärke entlang des Behandlungsweges einer Flüssigkeit wird prinzipiell auch in der EP-A1 0 610 723 durchgeführt, allerdings handelt es sich dabei um einen anderen Elektrodentyp. Bei diesem bildet die Flüssigkeit selbst eine der beiden Elektroden, und das Feld wird zwischen der Flüssigkeit und einer Gegenelektrode, an der sie vorbeiströmt, ausgebildet. Der Aufbau und die Funktion einer derartigen Elektrodenanordnung unterscheidet sich daher grundlegend von der vorliegenden Elektrodenanordnung.

Weitere Vorteile und Einzelheiten der Erfindung werden im folgenden anhand der beiliegenden Zeichnung erläutert. In dieser zeigt

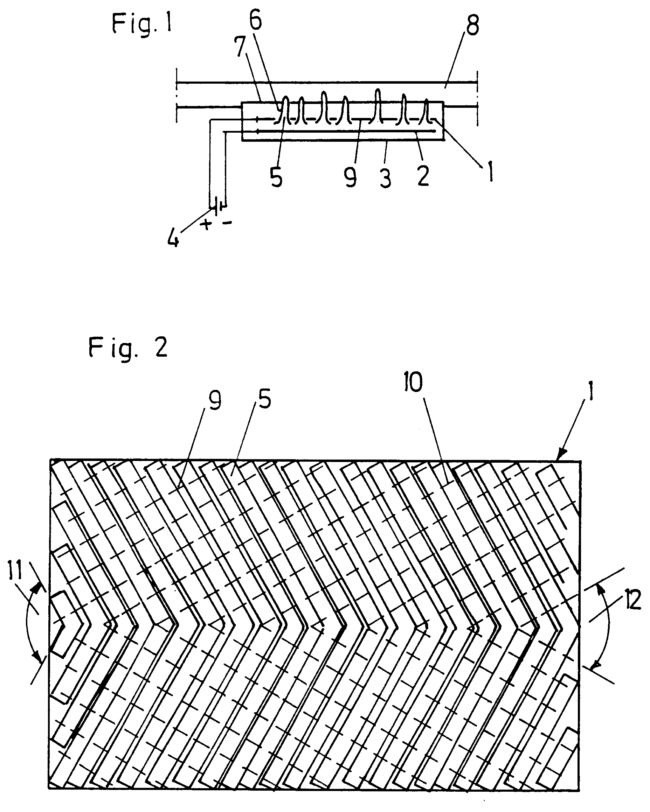

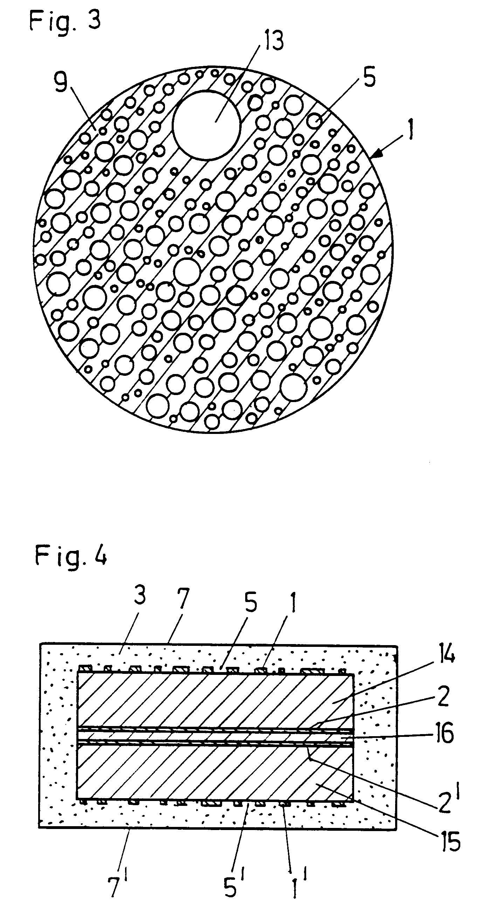

Fig. 1 eine schematische Darstellung einer erfindungsgemäßen Elektrodenanordnung, an der eine zu behandelnde Flüssigkeit vorbeiströmt, Fig. 2 eine schematische Darstellung eines ersten Ausführungsbeispiels der Erfindung, Fig. 3 eine schematische Darstellung eines zweiten Ausführungsbeispiels der Erfindung, und Fig. 4 eine schematische Darstellung einer erfindungsgemäßen doppelseitig wirksamen Elektrodenanordnung.

Die in Fig. 1 schematisch dargestellte erfindungsgemäße Elektrodenanordnung weist eine elektrisch leitende Elektrode 1 und eine elektrisch leitende Gegenelektrode 2 auf, die in einem Dielektrikum 3 eingebettet sind. Zwischen der Elektrode 1 und der Gegenelektrode 2 wird über eine Spannungsquelle 4 ein elektrisches Feld angelegt, wobei die Gegenelektrode 2 auf Erdpotential liegt. In der Elektrode 1 sind Löcher 5 im Leitermaterial vorgesehen, durch die das zwischen Elektrode 1 und Gegenelektrode 2 angelegte Feld durchgreift. Diese Felddurchgriffe 6 sind in der Fig. 1 schematisch dargestellt und reichen bis zur Oberfläche 7 des Dielektrikums 3. Die angelegte Spannung 4 beträgt beispielsweise 4000 Volt.

Das isolierende Dielektrikum muß wasserbeständig bzw. beständig gegenüber der zu behandelnden Flüssigkeit sein und soll einfach zu verarbeiten und mechanisch stabil sein. Geeignete Materialien sind beispielsweise Polyurethane, Epoxide und Silikone.

Über die Oberfläche 7 des Dielektrikums strömt die zu behandelnde Flüssigkeit 8, welche gelöste Stoffe aufweist, wobei die Flüssigkeit beispielsweise Wasser ist, in dem Kalk gelöst ist.

Erfindungsgemäß variiert das von der Elektrode 1 und Gegenelektrode 2 hervorgerufene, auf die Oberfläche 7 des Dielektrikums 3 durchgreifende Feld 6 entlang der Oberfläche 7 des Dielektrikums 3 örtlich. Dies kann auf verschiedene Weise erreicht werden, beispielsweise indem die zwischen den Löchern 5 im Leitermaterial der Elektrode 1 vorliegenden Stege 9 des Leitermaterials unterschiedliche Abmessungen aufweisen. Weiters können die Löcher 5 im Leitermaterial der Elektrode 1 unterschiedliche Abmessungen aufweisen und/oder unregelmäßig verteilt sein. Andere Möglichkeiten bestehen beispielsweise darin, daß der Abstand zwischen Elektrode 1 und Gegenelektrode 2 variiert, oder daß der Abstand der Elektrode 1 von der Oberfläche 7 des Dielektrikums 3 variiert. Es könnten auch als Dielektrikum 3 verschiedene Materialien entlang der Oberfläche 7 verwendet werden bzw. die dielektrischen Eigenschaften des Dielektrikums könnten entlang der Oberfläche verändert werden (z.B. durch Dotierung). Die Variationen können jeweils kontinuierlich oder stochastisch sein.

Ein bevorzugtes Ausführungsbeispiel der Elektrode 1 ist in Fig. 2 dargestellt. Die Löcher 5 im Leitermaterial weisen eine konstante Breite von typischerweise 2 - 10 mm (je nach Schichtdicke des Leitermaterials) auf. Die dazwischen liegenden Stege 9 werden in ihrer Breite zwischen 0,5 mm und 10 mm kontinuierlich variiert. Dadurch wird eine Modulation der elektrischen Feldstärke an der Oberfläche 7 der Elektrodenanordnung erreicht. Die Löcher 5 und Stege 9 verlaufen auf einer Elektrodenhälfte parallel zueinander und schneiden sich in der Mitte der Elektrode unter einem bestimmten Winkel 11. Auf der Oberfläche 7 des Dielektrikums 3 sind bei diesem Ausführungsbeispiel Erhebungen 10 in der Form eines Fischgrätmusters aufgeprägt, die in Fig. 2 strichliert dargestellt sind (in Fig. 1 nicht dargestellt). Diese Erhebungen 10 bestimmen an der Oberfläche 7 die Fließrichtung der Flüssigkeit 8. Da die Stege 9 senkrecht zur Richtung der das Fischgrätmuster bildenden Erhebungen 10 stehen, durchläuft die Flüssigkeit 8 eine maximale Anzahl von Zonen mit sich ändernder Polarisation auf der Oberfläche 7. Über das Fischgrätmuster der Erhebungen 10 lassen sich der Strömungswiderstand und die Strömungseigenschaften für die Flüssigkeit 8 einstellen. Vorzugsweise wird für das Fischgrätmuster ein Winkel 121zwischen 20 und 70° verwendet.

Um eine besonders starke Polarisierung entlang der Flanken des Fischgrätmusters zu erhalten, ist es möglich, die Erhebungen 10 zumindest im Bereich ihrer Scheitelpunkte elektrisch leitfähig zu machen und auf Erdpotential zu legen. Diese Kontaktierung kann durch Aufbringen eines Leitlacks, durch leitfähig Machen des verwendeten Isolierharzes (durch lokales Dotieren mit Graphit) oder durch sonstiges Auf- oder Einbringen eines leitfähigen Materials erfolgen.

Ein weiteres bevorzugtes Ausführungsbeispiel der Erfindung ist in Fig. 3 dargestellt. Bei diesem weist die Elektrode 1 im wesentlichen kreisförmige Löcher 5 auf, deren Durchmesser und deren Abstand untereinander variiert. Die Anordnung der Löcher erfolgt dabei im wesentlichen zufällig, wobei aber im Bereich um den Wassereintritt 13 eher kleinere Löcher gehäuft auftreten, im größeren Abstand dagegen eher größere Löcher. Durch geeignete Maßnahmen, beispielsweise eine vor der Elektrodenanordnung senkrecht zum Wassereintritt 13 angeordnete Prallplatte, wird erreicht, daß das Wasser entlang der Oberfläche der Elektrodenanordnung strömt. Anstelle von kreisförmigen Löchern 5 können auch unregelmäßig geformte Löcher vorgesehen sein.

Wie in Fig. 4 dargestellt ist, kann auch eine zweiseitig aktive erfindungsgemäße Elektrodenanordnung ausgebildet werden. Dazu sind zwei Elektroden 1, 1' vorgesehen, welche jeweils Löcher 5, 5' im Leitermaterial aufweisen, und zwischen denen zwei Gegenelektroden 2, 2' angeordnet sind, die auf gleichem Potential, vorzugsweise Erdpotential, liegen können. Zwischen der Elektrode 1 und der Gegenelektrode 2 ist eine erste Isolierschicht 14, zwischen der Elektrode 1' und der Gegenelektrode 2' eine zweite Isolierschicht 15 und zwischen der Gegenelektrode 2 und der Gegenelektrode 2' eine dritte Isolierschicht 16 vorgesehen. Dieser Schichtaufbau ist in ein Dielektrikum 3 eingebettet, das die aktiven Oberflächen 7 und 7' aufweist. Die Variation des auf die Oberflächen 7,7' des Dielektrikums 3 durchgreifenden Feldes entlang der Oberflächen 7, 7' des Dielektrikums 3 kann wiederum auf eine der beschriebenen Weisen hervorgerufen werden. Weiters können die Oberflächen 7, 7' mit Erhebungen, beispielsweise in der Form eines Fischgrätmusters, versehen werden, um die Fließrichtungen der über die Oberflächen 7, 7' strömenden Flüssigkeit entsprechend zu leiten. Mehrere solche Elektrodenanordnungen können parallel zueinander in einem bestimmten Abstand zueinander angeordnet werden, wodurch die maximale Durchflußmenge der Flüssigkeit bestimmt wird.

Für besondere Anwendungen ist es möglich, die Oberfläche 7 (bzw. 7') des Dielektrikums 3 entsprechend zu funktionalisieren. Geeignete Gruppen dazu sind beispielsweise Sulfongruppen, Carboxylgruppen, Phosphatgruppen, tertiäre und quartäre Ammoniumgruppen. Eine besondere Variante der Funktionalisierung besteht im Einbringen von anorganischen Füllstoffen, wie Zeolithen oder Carbonaten in das Isolierharz im Bereich der Oberfläche 7.

Eine weitere Möglichkeit der Variation der Feldstärke an der Oberfläche des Dielektrikums bestünde auch darin, daß die zwischen Elektrode 1 und Gegenelektrode 2 angelegte Spannung variiert wird, während die Flüssigkeit entlang der Oberfläche 7 des Dielektrikums 3 strömt.

Eine besonders einfache Herstellung der Elektrodenanordnung wird dadurch ermöglicht, daß die Elektrode 1 und/oder die Gegenelektrode 2 als aufgedruckter Leiter ausgebildet ist.

## Patentansprüche

1. Elektrodenanordnung mit einer elektrisch leitenden Elektrode und einer elektrisch leitenden Gegenelektrode, zwischen denen eine elektrische Spannung unter Ausbildung eines elektrischen Feldes anlegbar ist und die in einem Dielektrikum eingebettet sind, wobei die Elektrode Löcher im Leitermaterial zur Ausbildung eines Felddurchgriffs auf die Oberfläche des Dielektrikums aufweist, dadurch gekennzeichnet, daß das von der Elektrode (1) und Gegenelektrode (2) hervorgerufene, auf die Oberfläche (7) des Dielektrikums (3) durchgreifende Feld an der Oberfläche (7) des Dielektrikums (3) örtlich variiert.

2. Elektrodenanordnung nach Anspruch 1, dadurch gekennzeichnet, daß die zwischen den Löchern (5) im Leitermaterial der Elektrode (1) vorliegenden Stege (9) des Leitermaterials unterschiedliche Abmessungen aufweisen.

3. Elektrodenanordnung nach Anspruch 1 oder 2, dadurch gekennzeichnet, daß die Löcher (5) im Leitermaterial der Elektrode (1) unterschiedliche Abmessungen aufweisen und/oder unregelmäßig verteilt sind.

4. Elektrodenanordnung nach einem der Ansprüche 1 bis 3, dadurch gekennzeichnet, daß der Abstand zwischen Elektrode (1) und Gegenelektrode (2) variiert.

5. Elektrodenanordnung nach einem der Ansprüche 1 bis 4, dadurch gekennzeichnet, daß der Abstand der Elektrode (1) von der Oberfläche (7) des Dielektrikums (3) variiert.

6. Elektrodenanordnung nach einem der Ansprüche 1 bis 5, dadurch gekennzeichnet, daß die dielektrischen Eigenschaften des Dielektrikums (3) entlang der Oberfläche (7) variieren.

7. Elektrodenanordnung nach einem der Ansprüche 1 bis 6, dadurch gekennzeichnet, daß die Oberfläche (7) des Dielektrikums (3) Erhebungen (10), vorzugsweise in der Form eines Fischgrätmusters, aufweist, welche die Fließrichtung der an der Oberfläche (7) fließenden Flüssigkeit (8) bestimmen.

8. Elektrodenanordnung nach Anspruch 7, dadurch gekennzeichnet, daß die Erhebungen (10), zumindest im Bereich ihrer Scheitelpunkte, eine elektrisch leitende Oberfläche aufweisen, an die ein Potential anlegbar ist.

9. Elektrodenanordnung nach einem der Ansprüche 1 bis 8, dadurch gekennzeichnet, daß zur Ausbildung einer zweiseitig aktiven Elektrodenanordnung zwei Elektroden (1,1') mit Löchern (5,5') im Leitermaterial vorgesehen sind, zwischen denen zumindest eine Gegenelektrode (2,2') angeordnet ist.

10. Elektrodenanordnung mit einer elektrisch leitenden Elektrode und einer elektrisch leitenden Gegenelektrode, zwischen denen ein elektrisches Feld anlegbar ist und die in einem Dielektrikum eingebettet sind, wobei die Elektrode Löcher im Leitermaterial zur Ausbildung eines Felddurchgriffs auf die Oberfläche des Dielektrikums aufweist, insbesondere nach einem der Ansprüche 1 bis 9, dadurch gekennzeichnet, daß die Elektrode (1) und/oder die Gegenelektrode (2) als aufgedruckter Leiter ausgebildet ist.

11. Elektrodenanordnung nach einem der Ansprüche 1 bis 10, dadurch gekennzeichnet, daß zusätzlich oder anstelle der örtlichen Variation des an die Oberfläche (7) des Dielektrikums (3) durchgreifenden Feldes dieses zeitlich variiert.
